Europäisches Patentamt

European Patent Office

Office européen des brevets

(19)

(11) Veröffentlichungsnummer : **0 054 267**
**B1**

# (12) EUROPÄISCHE PATENTSCHRIFT

(45) Veröffentlichungstag der Patentschrift :
17.10.84

(21) Anmeldenummer : 81110326.6

(22) Anmeldetag : 10.12.81

(51) Int. Cl.³ : **C 01 B 25/45, C 09 C 1/04,**
**C 09 D 5/08**

(54) Aluminiumzinkphosphathydrate bzw. basische Aluminiumzinkphosphathydrate, Verfahren zu ihrer Herstellung sowie ihre Verwendung in Anstrichmitteln.

(30) Priorität : 11.12.80 DE 3046698

(43) Veröffentlichungstag der Anmeldung :
23.06.82 Patentblatt 82/25

(45) Bekanntmachung des Hinweises auf die Patenterteilung : 17.10.84 Patentblatt 84/42

(84) Benannte Vertragsstaaten :
AT BE DE FR GB IT NL SE

(56) Entgegenhaltungen :
EP-A- 0 031 428
DE-A- 2 655 458
DE-A- 2 656 779
Patent Abstracts of Japan, Band 5, Nr. 35, 5. März
1981
FARBE UND LACK, Band 79, Nr. 1, 1973, Hannover, J.
RUF "Unbunte Korrosionsschutzpigmente", Seiten 22
bis 27

(73) Patentinhaber : **Dr. Hans Heubach GmbH & Co. KG**
**Heubachstrasse**
**D-3394 Langelsheim 1 (DE)**

(72) Erfinder : **Haacke, Wigo, Dr. Ing.**
**Lampestrasse 1**
**D-3380 Goslar (DE)**
Erfinder : **Adrian, Gerhard, Dipl.-Chem.**
**Talstrasse 20 a**
**D-3380 Goslar (DE)**
Erfinder : **Gawol, Manfred**
**Altenauer Strasse 15**
**D-3392 Clausthal-Zellerfeld (DE)**
Erfinder : **Heubach, Rainer, Dipl.-Kfm.**
**Nonnenweg 14**
**D-3380 Goslar (DE)**
Erfinder : **Bittner, Annegret, Chem. Ing.**
**Am Wiesenhang 19**
**D-3394 Langelsheim 2 (DE)**

(74) Vertreter : **Patentanwälte Müller-Boré, Deufel,**
**Schön, Hertel, Lewald, Otto**
**Postfach 26 02 47 Isartorplatz 6**
**D-8000 München 26 (DE)**

EP 0 054 267 B1

**0 054 267**

## Beschreibung

Zinkphosphate gehören zu den Korrosionsschutzpigmenten, die aus Umweltsgründen in zunehmendem Maße anstelle von Zinkchromaten eingesetzt werden. Obwohl sie nicht die gute Korrosionsschutzwirkung wie Zinkchromate besitzen, bilden sie dennoch auf Metallunterlagen sog. Inhibitorkomplexe, die mit Phosphatierungsschichten verglichen werden können. Die Korrosionsschutzwirkung von Zinkphosphaten ist jedoch in vielen Systemen nicht ausreichend, so daß Kombinationen mit anderen Pigmenten empfohlen wurden, beispielsweise Kombinationen mit Zinkoxid, Phosphiten oder Molybdaten (E. Meyer, Fatipec-Kongress-Buch 1970, S. 471-475 und J. Ruf, farbe + lack, 79. Jahrgang Nr. 1, 1973, S. 22-27). Schließlich wurden Mischkristalle von Zinkphosphat mit anderen Metallphosphaten beschreiben. So beschreibt die DE-OS-26 55 458 Mischkristalle aus Zinkphosphat und Eisenphosphat, während die DE-OS 26 56 779 Calcium-Zink-Phosphatenzum Inhalt hat.

Die Erfindung hat sich die Aufgabe gestellt, Korrosionsschutzpigmente zu schaffen, die gegenüber den vorstehend genannten eine wesentlich verbesserte Korrosionsschutzwirkung besitzen.

Diese Aufgabe wird durch die Erfindung durch ein Verfahren gemäß dem Anspruch gelöst, durch welches Aluminiumzinkphosphathydrate bzw. basische Aluminiumzinkphosphathydrate mit einem Kristallwasseranteil von 0,5 bis 4 Mol, insbesondere 1,5 bis 2 Mol, erhalten werden, die sich als Korrosionsschutzpigmente, welche gegenüber bekannten Pigmenten eine wesentlich verbesserte Korrosionsschutzwirkung besitzen und vorzugsweise in Anstrichmitteln eingesetzt werden.

Es wurde festgestellt, daß diese neuen Verbindungen im Zusammenwirken mit dem jeweiligen Bindemittel zu einer wesentlich besseren Haftung des Anstrichfilms auf der Metallunterlage und zu einer deutlich verbesserten Korrosionsschutzwirkung gegenüber Zinkphosphat führen, was auf die Bildung von zusätzlichen Haft- und Inhibitorkomplexen zurückzuführen sein dürfte.

Vorzugsweise wird für die erfindungsgemäße Umsetzung eine 50 gew.-%ige saure Aluminiumdihydrogenphosphat $[AlCH_2PO_4)_3]$-lösung eingesetzt. Dabei wird 1 Mol des Aluminiumdihydrogenphosphates mit 2,4 bis 4 Mol Zinkoxid, insbesondere mit 3,15 bis 3,5 Mol Zinkoxid, zur Umsetzung gebracht. Bei den Produkten, die unter Einsatz von weniger als 3 Mol Zinkoxid pro 1 Mol Aluminiumdihydrogenphosphat hergestellt werden, wird ein Alkalialuminat in einer Menge bis 0,5 Mol, insbesondere Natriumaluminat, als zusätzlicher Aluminiumspender eingesetzt. Auf diese Weise entstehen phosphatreiche Verbindungen, die, auf 1 Mol Zinkphosphat bezogen, mehr als 1 Mol Aluminiumphosphat enthalten.

Die Umsetzung erfolgt in zweckmäßiger Weise bei höherer Temperatur, insbesondere bei 30 bis 80 °C und in ganz besonders bevorzugter Weise bei 50 °C.

Zur Neutralisation der vorhandenen Überschüsse an saurem Aluminiumdihydrogenphosphat, kann außer Alkalialuminat, insbesondere Natriumaluminat, auch Alkalihydroxid, insbesondere Natriumhydroxid, verwendet werden. Durch die Verwendung von Alkalihydroxid kann zusätzlich auch Aluminiumoxidhydrat in das Produkt eingebracht werden.

Im einzelnen wird zweckmäßigerweise so verfahren, daß Zinkoxid mit Wasser benetzt bzw. aufgeschlämmt wird und die saure Aluminiumdihydrogenphosphatlösung sowie erforderlichenfalls in gelöster Form Alkalialuminat danach zugegeben werden. In Abhängigkeit vom Verdünnungsgrad können während der Zugabe der Reaktionspartner Temperaturen von 20 bis 80 °C erreicht werden. Die Mutterlauge wird durch Filtration abgetrennt, erforderlichenfalls gewaschen, und das entstehende Produkt bei 105 °C getrocknet und vermahlen.

Für die Überprüfung der Korrosionsschutzwirkung wurden von den erfindungsgemäß hergestellten Aluminiumzinkphosphathydraten bzw. basischen Aluminiumzinkphosphathydraten vier Pigmente ausgewählt, die unter Einhaltung der nachfolgenden Mol-Verhältnisse ZnO/Al $(H_2PO_4)_3$ hergestellt wurden :

|  |  | % PO$_4$ |
|---|---|---|
| Pigment 1 | 2,4 : 1 | 60,7 |
| Pigment 2 | 3 : 1 | 56,1 |
| Pigment 3 | 3,15 : 1 | 55,0 |
| Pigment 4 | 3,33 : 1 | 53,8 |

Diese Korrosionsschutzpigmente wurden im Vergleich zu Zinkchromat, Zinkphosphat, Zinkmolybdat und Zinkoxid getestet.

Die Tests wurden in folgenden Anstrichsystemen durchgeführt.

1. Grundanstrich auf Basis modifiziertes Holzöl/Tallöl-Alhydharz, PVK-Werte von 33 bis 37 %, freier Bindemittelanteil 30 %, Q = 0,7.

2. Grundanstrich auf Basis von Epoxidestern mit PVK-Werten von 40 bis 45 %, freier Bindemittelanteil, Q = 0,8.

Die Korrosionsschuztprüfung erfolgte im Salzsprühtest nach DIN 50021 und im Kesternich-Prüfgerät nach DIN 50018.

Um eine direkte Vergleichbarkeit der Leistungsfähigkeit der Korrosionsschutzpigmente zu ermöglichen, erfolgte die Prüfung bei konstanten freien Bindemittelanteilen.

2

**0 054 267**

Die Kriterien zur Bewertung der Korrosion nach

Blasenbildung der Beschichtung nach DIN 53209
Haftungsverlust der Beschichtung nach DIN 53151
Unterwanderung an Verletzungsstellen nach DIN 53167

wurden zu sogenannten Bewertungsziffern (BWZ) zusammengefaßt :

BWZ 100    = sehr gut
BWZ  90-80 = gut
BWZ  70-60 = gut bis mäßig
BWZ  50-40 = mäßig
BWZ  30-20 = schlecht
BWZ  10-0  = sehr schlecht

In der nachfolgenden Aufstellung ist die jeweilige Prüfrezeptur und die erhaltenen Ergebnisse im Salzsprühtest nach DIN 50021 zusammengefaßt :

Tabelle

Bindemittel : modifiziertes Holzöl/Tallöl-Alkydharz Prüfrezepturen

| | Gewichtsteile in % | | | | | | |
|---|---|---|---|---|---|---|---|
| | 1 | 2 | 3 | 4 | 5 | 6 | 7 |
| mod. Holzöl/Tallöl-Alkydharz, 60 %ig | 29,7 | 33,4 | 29,8 | 27,6 | 38,1 | 37,3 | 37,1 |
| Zinkchromat | 14,9 | — | — | — | — | — | — |
| Zinkphosphat | — | 15,2 | — | — | — | — | — |
| Zinkoxid | — | — | 23,0 | — | — | — | — |
| Zinkmolybdat | — | — | — | 20,5 | — | — | — |
| bas. Aluminiumzink-Phosphathydrat 1 | — | — | — | — | 12,4 | — | — |
| bas. Aluminiumzink-Phosphathydrat 2 | — | — | — | — | — | 13,2 | — |
| bas. Aluminiumzink-Phosphathydrat 3 | — | — | — | — | — | — | 13,0 |
| mod. Montmorillonit als Geliermittel, 10 %ig | 2,6 | 2,5 | 2,5 | 2,5 | 2,5 | 2,5 | 2,3 |
| Titandioxid | 4,2 | 4,9 | 4,3 | 4,3 | 4,3 | 4,6 | 4,5 |
| EWO-Schwerspat | 11,7 | 12,2 | 11,0 | 10,8 | 11,0 | 11,7 | 11,5 |
| Magnesiumsilikat | 7,2 | 7,8 | 6,9 | 6,8 | 7,0 | 7,4 | 7,3 |
| Xylol | 23,4 | 18,0 | 16,5 | 21,5 | 19,1 | 17,9 | 18,5 |
| Äthylglykol | 5,2 | 5,0 | 5,0 | 5,0 | 4,6 | 4,5 | 4,6 |
| Kobalthaltiges Sikkativ | 1,1 | 1,0 | 1,0 | 1,0 | 1,0 | 1,0 | 1,2 |
| | 100,0 | 100,0 | 100,0 | 100,0 | 100,0 | 100,0 | 100,0 |
| PVK in % | 40,4 | 39,4 | 39,3 | 40,8 | 34,0 | 35,8 | 35,4 |
| BWZ nach 300-stündiger salzsprühbeanspruchung DIN 50021 | 80 | 25 | 25 | 55 | 70 | 75 | 75 |
| BWZ nach 10 Zyklen Kesternichbeanspruchung DIN 50018 1,0 S | 20 | 50 | 50 | 40 | 65 | 70 | 70 |

Entsprechende Verbesserungen konnten auch in Grundanstrichen auf Basis von Epoxidestern erzielt werden.

3

0 054 267

Ansprüche

1. Verfahren zur Herstellung von Aluminiumzinkphosphathydraten bzw. basischen Aluminiumzinkphosphathydraten, dadurch gekennzeichnet, daß 1 Mol Aluminiumdihydrogenphosphat mit 2,4 bis 4 Mol, insbesondere 3,15 bis 3,5 Mol, Zinkoxid, gegebenenfalls unter Zusatz von Alkalialuminat in einer Menge bis 0,5 Mol, oder der äquivalenten Menge eines Alkalihydroxids, umgesetzt wird.

2. Verfahren nach Anspruch 1, dadurch gekennzeichnet, daß für die Umsetzung eine 50 gew.-%ige saure Aluminiumdihydrogenphosphatlösung verwendet wird.

3. Verfahren nach den Ansprüchen 1 und 2, dadurch gekennzeichnet, daß die Umsetzung bei erhöhter Temperatur durchgeführt wird.

4. Verfahren nach den Ansprüchen 1 bis 3, dadurch gekennzeichnet, daß die Umsetzung bei einer Temperatur von 30 bis 80 °C, insbesondere bei 50 °C, durchgeführt wird.

5. Verfahren nach den Ansprüchen 1 bis 4, dadurch gekennzeichnet, daß überschüssiges saures Aluminiumdihydrogenphosphat mit einem Alkalialuminat, insbesondere Natriumaluminat, oder gegebenenfalls mit einem Alkalihydroxid, insbesondere Natriumhydroxid, neutralisiert wird.

6. Verfahren nach den Ansprüchen 1 bis 5, dadurch gekennzeichnet, daß in Abhängigkeit von den eingesetzten Zinkoxid- und Aluminiumdihydrogenphosphatmengen durch Einsatz von Alkalialuminat bzw. Alkalihydroxid der $AlPO_4$-Anteil bzw. der Aluminiumoxidhydratanteil erhöht wird.

7. Verwendung der Aluminiumzinkphosphathydrate gemäß den Ansprüchen 1 bis 6 als Korrosionsschuztpigmente in Anstrichmitteln.


Claims

1. Process for the preparation of aluminium/zinc phosphate hydrates or basic aluminium zinc phosphate hydrates, characterised in that 1 mole of aluminium dihydrogen phosphate is reacted with 2.4 to 4 moles, especially 3.15 to 3.5 moles, of zinc oxide, if appropriate with the addition of an alkali metal aluminate in an amount of up to 0.5 mole or of the equivalent amount of an alkali metal hydroxide.

2. Process according to Claim 1, characterised in that a 50 % strength by weight acidic aluminium dihydrogen phosphate solution is used for the reaction.

3. Process according to Claims 1 and 2, characterised in that the reaction is carried out at an elevated temperature.

4. Process according to Claims 1 to 3, characterised in that the reaction is carried out at a temperature of 30 to 80 °C, especially at 50 °C.

5. Process according to Claims 1 to 4, characterised in that excess acid aluminium dihydrogen phosphate is neutralised with an alkali metal aluminate, especially sodium aluminate, or, if appropriate, with an alkali metal hydroxide, especially sodium hydroxide.

6. Process according to Claims 1 to 5, characterised in that, depending on the amounts of zinc oxide and aluminium dihydrogen phosphate employed, the proportion of $AlPO_4$ or the proportion of aluminium oxide hydrate is increased by employing an alkali metal aluminate or alkali metal hydroxide.

7. Use of the aluminium zinc phosphate hydrates according to Claims 1 to 6 as anti-corrosion pigments in paints.


Revendications

1. Procédé pour la préparation de phosphates de zinc et d'aluminium hydratés ou de phosphates de zinc et d'aluminium basiques hydratés, caractérisé en ce que l'on fait réagir 1 mole de dihydrogénophosphate d'aluminium avec 2, 4 à 4 moles, en particulier 3,15 à 3,5 moles d'oxyde de zinc, éventuellement sous addition d'un aluminate alcalin en une quantité allant jusqu'à 0,5 mole, ou la quantité équivalente, d'un hydroxyde alcalin.

2. Procédé selon la revendication 1, caractérisé en ce que l'on utilise pour la réaction une solution acide à 50 % en poids de dihydrogénophosphate d'aluminium.

3. Procédé selon les revendications 1 et 2, caractérisé en ce que la réaction se déroule à température élevée.

4. Procédé selon les revendications 1 à 3, caractérisé en ce que la réaction se déroule à une température de 30 à 80 °C, en particulier à 50 °C.

5. Procédé selon les revendications 1 à 4, caractérisé en ce que le dihydrogénophosphate d'aluminium acide en excès est neutralisé par un aluminate alcalin, en particulier l'aluminate de sodium, ou éventuellement avec un hydroxyde alcalin, en particulier l'hydroxyde de sodium.

6. Procédé selon les revendications 1 à 5, caractérisé en ce que le pourcentage de $AlPO_4$ ou le pourcentage d'oxyde d'aluminium hydraté augmente en fonction des quantités utilisées d'oxyde de zinc et de dihydrogénophosphate de zinc, par l'utilisation d'un aluminate alcalin ou d'un hydroxyde alcalin.

7. Utilisation des phosphates de zinc et d'aluminium hydratés selon les revendications 1 à 6 en tant que pigments anti-corrosion dans les peintures.

4